# EUROPEAN PATENT SPECIFICATION

(11) **EP 1 209 544 B1**
(45) Date of publication and mention of the grant of the patent: **26.10.2005**
(21) Application number: 00124400.3
(22) Date of filing: 21.11.2000
(51) Int. Cl.: G05B 19/4093, G05B 19/4097

(54) **Tool path data generation apparatus for nc machine tool and numerical controller provided with it**
Gerät zur Erzeugung von Werkzeugbahndaten für NC-Maschine und mit diesem Gerät ausgerüstete numerische Steuerung
Appareil de génération de données de trajectoire d'outil pour machine à commande numérique et commande numérique comprenant cet appareil

(43) Date of publication of application: 29.05.2002
(73) Proprietor: Mori Seiki Co., Ltd., Yamatokoriyama-shi, Nara 639-1160 (JP); Intelligent Manufacturing Systems International, Sacramento, CA 95814 (US)
(72) Inventor: Kadono, Mitsuhiko, Yamatokoriyama-shi, Nara, 639-1160 (JP)
(74) Representative: Reinhard - Skuhra - Weise & Partner

(56) References cited:
- EP-A- 0 996 045
- US-A- 5 272 622
- US-A- 5 276 606
- US-A- 5 465 221
- US-A- 5 532 933
- US-A- 5 757 649

## Description

### BACKGROUND OF THE INVENTION

### Field of the invention

The present invention relates to a tool path data generation apparatus for automatically generating tool path data in relation to position data to transfer a tool and cutting conditions etc. of a tool in an NC machine tool, and also relates to a numerical controller provided with such tool path data generation apparatus.

### Description of the Prior Art

As an apparatus for automatically generating tool path data with using design data of an object to be cut (hereinafter referred to as a workpiece) being created by CAD (Computer Aided Design), a tool path data generation apparatus using a CAM (Computer Aided Manufacturing) method has been widely known.

Design data created by CAD (hereinafter referred to as CAD data) comprises geometry data indicating a final shape and a dimension of the workpiece after being cut , for example, data in relation to coordinates and numerical formulas as well as dimension lines, etc. The tool path data generation apparatus extracts only geometry data of the workpiece from such CAD data, thereafter receiving data necessary to generate tool path data at any time through input by an operator operating the input unit, wherein data to be received includes data in relation to features of the workpiece shape such as a circular shape, a rectangular shape, a conical shape, a square pillar, a convex curved surface, or a concave curved surface, and also data in relation to cutting methods such as a kind of tool and cutting conditions, finally generating tool path data on the basis of such input data and geometry data extracted from above-mentioned CAD data.

However, in above-mentioned ordinary tool path data generation apparatus, since data in relation to the features of the workpiece shape as well as data in relation to the cutting methods both of which are necessary to generate tool path data must be inputted by the operator, it takes a long period to input those data, whereby it also takes another long period to machine the workpiece itself. In addition, it is very difficult to completely prevent artificial input errors, whereby such problems that the workpiece is defective or the jig and the tool are damaged might happen. Those problems may cause another critical problems in such a production to make one article for example a production to make a mold.

If an expected result cannot be obtained because of a chatter of tool and an overload in cutting when creating an NC cutting program on the basis of tool path data generated by the tool path data generation apparatus and when machining by the NC machine tool with using above-mentioned NC cutting program, it is necessary to correct the NC cutting program after a pursue of causes which may take a long period, further it is also necessary to back to an initial cutting stage in the tool path data generation apparatus for executing above-mentioned correction. As a result it takes another long period to re-output the NC cutting program, whereby the machine tool has to be stopped during such period, consequently productivity is deteriorated.

Document EP-A-0 996 045 A2 discloses an apparatus for generating a tool path for cutting a physical part, that physical part having a geometric configuration which is associated with geometric data to indicate the geometric configuration thereof.

Document US-A-5 757 649 discloses a CAD/CAM apparatus comprising means for recognising an omitted cut shape corresponding to the generated NC data or NC source data and means for automatically defining the omitted cut shape as a machining shape for an engraving discharge machine.

In view of the foregoing, it is an object of the invention to provide a tool path data generation apparatus which can speedily and securely generate and correct tool path data on the basis of CAD data, and also to provide a numerical controller provided with such tool path data generation apparatus.

### SUMMARY OF THE INVENTION

In accordance with the invention for achieving the above object, a tool path data generation apparatus is provided comprising the features of claim 1.

According to the tool path data generation apparatus in relation to the present invention, firstly data such as data in relation to dimension lines etc. which is thought to be unnecessary in generating tool path data is removed from design data of the workpiece created with using CAD, next only geometry data necessary to generate tool path data is extracted, finally at least features in relation to the three-dimensional geometry of the workpiece are extracted from above-mentioned geometry data by the feature data extractor. Here, the features of the three-dimensional shape mean geometric features of the workpiece such as a circular shape, a rectangular shape, a conical shape, a square pillar, a convex curved surface, or a concave curved surface etc.

Next, the optimal cutting method is set for each feature shape by the cutting method setting unit on the basis of feature data extracted by the feature data extractor as well as information stored in the tool/cutting data storage. Here, the cutting method includes several cutting modes such as a contour line cutting, a scanning line cutting, a circular interpolation, a straight line interpolation, and a cutting direction etc., and also includes a kind of tool, cutting conditions, feed pitch in a repetitive cutting of a specific cut cycle, and a cutting order in each machining area etc. Thus, tool path data is automatically and sequentially generated by the tool path data generator on the basis of the set cutting method.

As above mentioned, in this invention, an operator has to input neither data in relation to the feature shape of the workpiece nor data in relation to the cutting method such as the kind of tool and the cutting conditions, therefore a period taken for a data input can be completely eliminated, whereby there is such an advantage that tool path data can be speedily generated, which may lead another advantage such that the workpiece can be speedily cut. Further, since any artificial error in an input operation never happens, the workpiece is not defective and the jig and the tool are not damaged. Those advantages of the present invention may become more conspicuous in such a production to make one article for example a production to make a mold.

Here, tool path data in this invention includes all information such as data in relation to position data to transfer a tool, spindle speed, and feed rate in the NC machine tool necessary to operate it, meaning a basic data to generate an NC cutting program and motion data for the purpose of direct driving a servo mechanism finaly.

In addition, a setting the cutting method in the cutting method setting unit can be smoothly executed when the machining area is divided for each feature shape of the workpiece so as to effectively set the cutting method for each divided machining area on the basis of feature data extracted by the feature data extractor. At this period, the tool path data generator generates tool path data for each divided machining area on the basis of the cutting method set by the cutting method setting unit.

The tool path data generation apparatus in relation to the present invention further comprises an information generator related to cutting for generating information related to cutting such as a consumption amount of a tool, an estimated period taken for a wear of the tool, and an estimated period taken for a cutting on the basis of the cutting method set by the cutting method setting unit and also on the basis of information stored in the tool/cutting data storage. According to the present invention, information related to cutting necessary to set up can be obtained, whereby it is possible to easily and speedily execute the setup of cutting by the NC machine tool. An optimal cutting hours (a daytime or a nighttime) can be appropriately selected through an estimation of the cutting period. When it is judged that the cutting will be finished for a short period, the cutting operation is done during a daytime when people is in, thereafter it is possible to cut or set up next workpiece, which can improve productivity. On the other hand, when it is judged that it should take a long period for the cutting, it is possible to select a unmanned night time. Since a cost needed to a completion of the workpiece can be preparatively computed before an actual cutting thereof because the necessary number of the tools and a period taken for the cutting can be previously decided, therefore a speedy estimation of the cost is enabled.

It is better to output the cutting methods set by above-mentioned cutting method setting unit and also by information related to cutting generated by the information generator related to cutting as cutting scenarios owing to a further provided cutting scenario output unit. Thus, even when the expected result cannot be obtained because of the chatter of tool and the overload etc. in the actual cutting, causes relating to those problems can be speedily pursued by making reference to the output cutting scenarios. The cutting scenarios herein mentioned mean the cutting method and information related to cutting as above mentioned.

Further, there are other preferable embodiments in relation to the tool path data generation apparatus such that tool path data generated by the tool path data generator can be output with being converted to the NC cutting program owing to a further provided NC cutting program generator and an NC cutting program outputting unit, in addition such that above-mentioned tool path data can be output with being converted to motion data owing to a further provided motion data generator and a motion data output unit. Thus, the obtained cutting program and motion data can be directly inputted into a numerical controller of the NC machine tool through an on-line cutting or can be inputted into the numerical controller through a recording media such as a floppy disc etc. Thus, according to these preferable embodiments of the present invention, an operability of the NC machine tool can be improved because tool path data can be generated without being interlocked with the NC machine tool or through an off-line cutting. Motion data herein mentioned means data to directly drive the servo mechanism etc. of the NC machine tool.

Furthermore the present invention provides a numerical controller comprising the features of claim 6. According to the numerical controller in the present invention, the workpiece can be cut by executing generated tool path data at any time or executing it at real time. Here, the present invention relates to the numerical controller which controls an operation of the NC machine tool on the basis of tool path data including the position data to transfer a tool and the cutting conditions of the tool, comprising either of the tool path data generation apparatus provided with the NC cutting program generator and the NC cutting program outputting unit or that provided with the motion data generator and the motion data output unit, further comprising an executing unit to sequentially execute processes on the basis of tool path data generated by the tool path data generator and to control the operation of above-mentioned NC machine tool.

The numerical controller in relation to the present invention controls the operation of the NC machine tool on the basis of tool path data including the position data to transfer a tool and the cutting conditions of the tool, comprising the tool path data generation apparatus, a cutting scenario storage which stores the cutting method set by the cutting method setting unit and information related to cutting generated by the information generator related to cutting, the executing unit which sequentially executes the processes on the basis of tool path data generated by the tool path data generator and receives interruption signals for temporarily stopping the processes while receives resuming signals for resuming the processes so as to control the operation of the NC machine tool, and a cutting scenario rewriting unit for rewriting the cutting method stored in the cutting scenario storage.

According to the present invention, when the expected result cannot be obtained, the cutting is temporarily stopped by inputting the interruption signals into the executing unit. And after the cutting method stored in the cutting scenario storage and/or information related to cutting have been appropriately changed through the cutting scenario rewriting unit, tool path data is regenerated, thereafter the cutting can be re-started according to regenerated tool path data. As mentioned above according to the present invention, for changing generated tool path data, the corresponding cutting method etc. can be speedily corrected, therefore a series of operations from a generation of tool path data to a final cutting of the workpiece can be executed for a short period. Especially in the production to make one article for example the production to make one mold, the present invention has an advantage such that generated tool path data can be promptly corrected to re-start the cutting.

Further, in the numerical controller in relation to the present invention further provided with a tool/cutting data updating unit, knowledge obtained through above-mentioned cutting can be reflected on a continuing cutting by referring to data stored in the cutting scenario storage that has been rewritten as mentioned above and by updating data stored in the tool/cutting data storage.

In addition, in the present invention further provided with a data base output unit, data stored in the tool/cutting data storage which has been updated is preferably output through the data base output unit. Thus, above-mentioned output data is inputted into the tool path data generation apparatus provided apart from the numerical controller for updating the data base thereof, consequently above-mentioned knowledge can be effectively reflected on the generation and processing of tool path data in the tool path data generator.

### BRIEF DESCRIPTION OF THE DRAWINGS

Fig. 1 is a block diagram showing main components of a numerical controller in accordance with first embodiment of the invention.
Fig. 2 is a perspective view showing one example of a geometry of a workpiece obtained from geometry data in accordance with first embodiment.
Fig. 3 is an explanation drawing explaining process contents in a feature data extractor in accordance with first embodiment.
Fig. 4 is an explanation drawing explaining process contents in a feature data extractor in accordance with second embodiment.
Fig. 5 is another explanation drawing explaining process contents in the feature data extractor in accordance with second embodiment.
Fig. 6 is the other explanation drawing explaining process contents in the feature data extractor in accordance with second embodiment.
Fig. 7 is an explanation drawing showing one example of data stored in a tool/cutting data storage in accordance with first embodiment.
Fig. 8 is a block diagram showing main components of a tool path data generation apparatus in accordance with second embodiment of the invention.

### DETAILED DESCRIPTION OF THE INVENTION

Now, specific embodiments of the invention will hereinbelow be described with reference to the accompanying drawing.

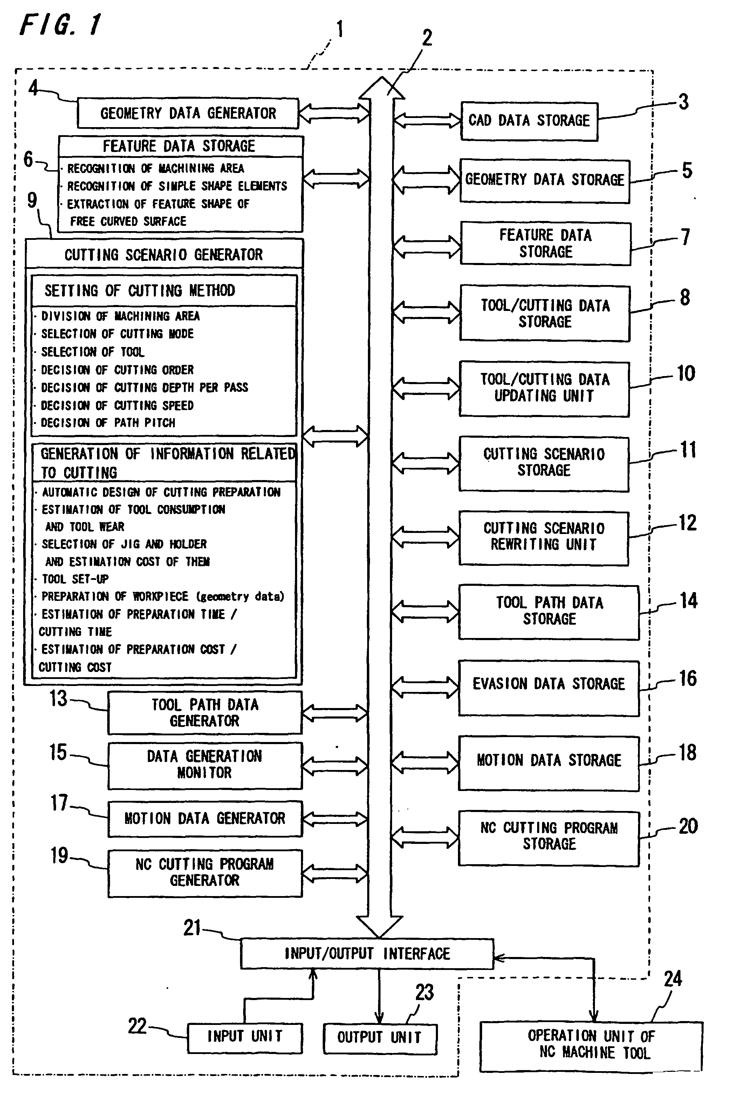

Firstly, first embodiment of the invention will be described with reference to Fig. 1. Fig. 1 is a block diagram showing main components of a numerical controller in accordance with this embodiment.

As shown in Fig. 1, a numerical controller 1 of this embodiment comprises a geometry data generator 4, a feature data extractor 6, a cutting scenario generator 9, a tool/cutting data updating unit 10, a cutting scenario rewriting unit 12, a tool path data generator 13, a data generation monitor 15, each generation unit of a motion data generator 17 and an NC cutting program generator 19, a CAD data storage 3, a geometry data storage 5, a feature data storage 7, a tool/cutting data storage 8, a cutting scenario storage 11, a tool path data storage 14, an evasion data storage 16, each storing unit of a motion data storage 18 and an NC cutting program storage 20, an input/output interface 21, and an input unit 22 and an output unit 23 connected to the input/output interface 21, all of which are mutually connected to each other through a bus line 2. In addition, each operation unit of an NC machine tool as an external apparatus is connected to the input/output interface 21.

The CAD data storage 3 is a functioning unit to store CAD data in relation to the workpiece, wherein such CAD data is inputted through an on-line processing or through a recording media such as a floppy disc from the input unit 22. Above-mentioned CAD data is usually created with using an apparatus provided apart from the numerical controller 1 of this embodiment, including design data indicating a final shape and a dimension of the workpiece, for example coordinates data and numerical formula data in relation to the workpiece shape as well as data of a finished surface precision, workpiece material and workpiece shape. Here, such CAD data usually includes data unnecessary to generate tool path data, for example data in relation to dimension lines etc.

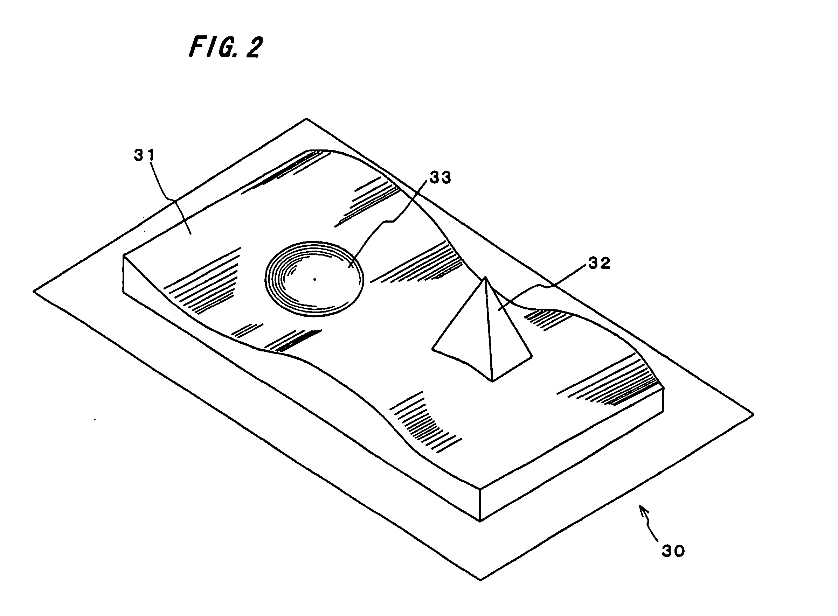

The geometry data generator 4 is a process unit which removes above-mentioned data in relation to the dimension lines etc. unnecessary to generate tool path data from CAD data stored in the CAD data storage 3, extracting only data necessary to generate tool path data. Geometry data extracted by the geometry data generator 4 is stored in the geometry data storage 5. One example of the geometry of the workpiece will be shown in Fig. 2 in a visual manner on the basis of geometry data stored in the geometry data storage 5. As shown in Fig. 2, a workpiece 30 has a wavy curved area 31 (a free curved surface), and a convex area (a quadrangular pyramid body) 32 and a concave area 33 both of which are formed on the wavy curved area 31.

The feature data extractor 6 is another process unit which recognizes a specific machining area in an area decided on the basis of geometry data stored in the geometry data storage 5, then extracting features in relation to a three-dimensional geometry of the workpiece within above-mentioned recognized machining area. An extraction and processing of the features comprises two processes, one is a simple geometry extraction that is a comparatively simple process so as to extract comparatively simple geometric elements for example a conical shape or a square pillar shape etc. of the workpiece which can be directly extracted from geometry data within above-mentioned recognized machining area, the other is an extraction of a feature shape of a free curved surface that is a little bit complicated process so as to extract the free curved surface etc. which cannot be directly extracted from geometry data within same area.

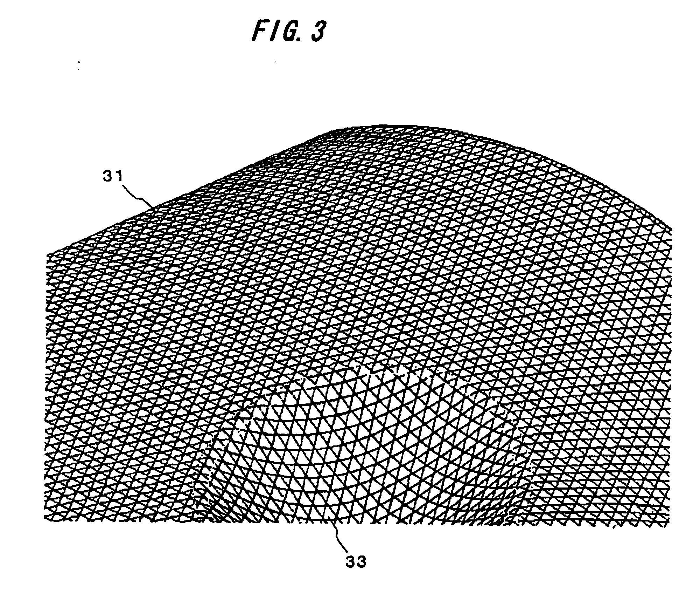

The extraction of the feature shape of the free curved surface will be hereinbelow described in detail. In this embodiment, such extraction is executed with using a pattern projection method. The extraction which uses above-mentioned pattern projection method is to project a virtual image formed of small triangles on the surface of the workpiece obtained from above-mentioned geometry data as shown in Fig. 3, thereafter deciding a normal on each small triangle which has been imaged on the surface of the workpiece, analyzing a direction of each normal so as to extract the geometric feature of the workpiece as a result. Fig. 3 indicates a condition when the virtual image is projected on the workpiece 30 as shown in Fig. 2.

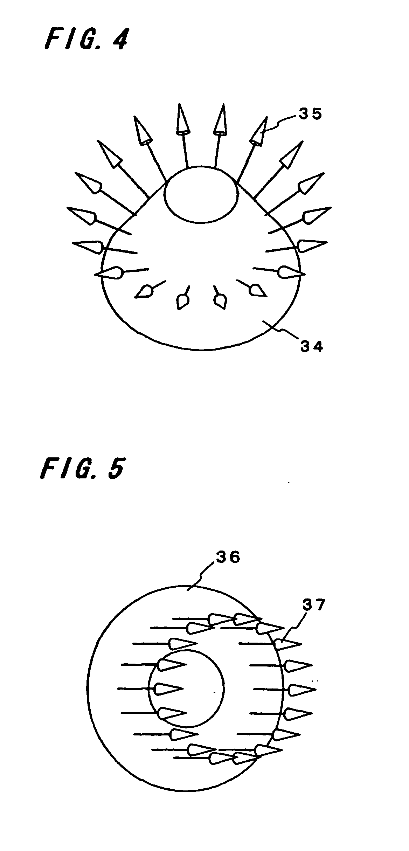

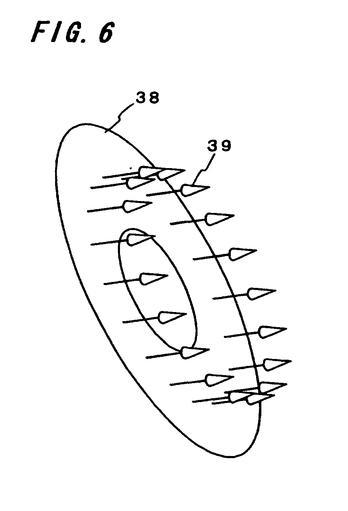

For example, as shown in Fig. 4, in an area 34 of a circular truncated cone shape, each normal 35 of same area is spread in a radial manner without crossing with each other. As shown in Fig. 5, in an area 36 having a vertical plane, each normal 37 of same area is provided in a parallel manner. As shown in Fig. 6, in an area 38 having a slant, each normal 39 of same area has a specific angle. When an area has a concave shape (not shown), each normal of same area crosses with each other. Thus, the feature shape of the workpiece can be decided by analyzing the direction of the normal. In the extraction of the feature shape of the free curved surface, the feature shape is extracted through above-mentioned method. Thereafter, feature data (area data and data in relation to the feature shape) which has been extracted through above-mentioned method is stored in the feature data storage 7.

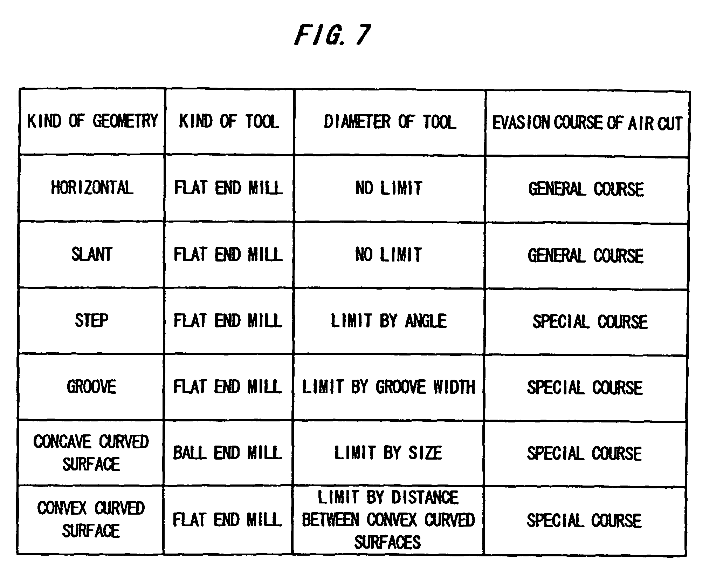

The tool/cutting data storage 8 is a functioning unit to store tool information and cutting information, concretely to say, storing a cutting mode according to each feature shape (for example a contour line cutting, a scanning line cutting, a straight line interpolation, a circular interpolation, and a kind of evasion course of air cut etc.), a kind of tool (types, material etc.), tool information such as a diameter of tool etc., a cutting speed set for each kind of tool in accordance with material of the workpiece, and data in relation to a cutting amount and an allowance for cutting etc. Here, one example of data stored in the tool/cutting data storage 8 is shown in Fig. 7.

The cutting scenario generator 9 executes two processes, one is to decide an optimal cutting method on the basis of data stored in the tool/cutting data storage 8 and also on the basis of feature data stored in the feature data storage 7, the other is to generate information related to cutting on the basis of the decided cutting method. A setting and processing of the cutting method is to search the tool/cutting data storage 8 on the basis of feature data for setting an optimal cutting mode, an optimal kind of tool to be used, and an optimal cutting condition etc. for each machining area, setting a feed pitch based upon finished surface roughness of a finished surface etc. of the workpiece when a repetitive cutting is requested in a specified cycle, on the other hand, continuously cutting machining area as many as possible when a common tool should be used in many machining area, thus deciding a cutting order for each machining area with considering a cutting efficiency. Here, the setting and processing of the cutting method can be much more easily and speedily executed when the machining area is further divided into a plurality of small area in accordance with the feature shape then above-mentioned cutting method is set for each small area.

A generation and processing of information related to cutting is to generate information in relation to the cutting (information related to cutting) such as a consumption amount of a tool, a period taken for the tool to reach a wear limit thereof (estimation), set-up data of the tool, a period taken for preparing for the cutting (estimation), a period taken for the cutting (estimation), and a cutting cost (estimation) etc. Thus, decided cutting method and information related to cutting are both stored in the cutting scenario storage 11 as cutting scenarios.

In the numerical controller 1 in accordance with this embodiment, a process in the tool path data generator 13 is executed after each process has been sequentially executed in the feature data extractor 6 as well as in the cutting scenario generator 9.

The tool path data generator 13 is a process unit to sequentially generate tool path data including position data to transfer a tool, spindle speed, and feed rates of the tool for each machining area according to the set cutting order on the basis of the cutting scenario especially the cutting method stored in the cutting scenario storage 11. Here, generated tool path data is transmitted to the tool path data storage 14 and the data generation monitor 15 in order. The tool path data storage 14 is a functioning unit to store received tool path data in order, storing all tool path data generated by the tool path data generator 13. The data generation monitor 15 is a process unit to temporarily keep received tool path data then transmit it to the motion data generator 17 in accordance with a transmission request therefrom.

The motion data generator 17 is a process unit to generate motion data for directly driving a servo mechanism provided in the NC machine tool, generating motion data on the basis of received tool path data, outputting generated motion data to an operation unit 24 of the NC machine tool through the input/output interface 21, transmitting such motion data to the motion data storage 18. The motion data storage 18 stores all motion data generated by the motion data generator 17, while each operation unit 24 of the NC machine tool is driven on the basis of received motion data, whereby the workpiece is cut. Here, the motion data generator 17 plays a role as an executing unit as set forth in claim 7.

As above mentioned, in the numerical controller 1 in accordance with this embodiment, a generation of tool path data and a cutting of the workpiece can be executed and processed at real time.

The data generation monitor 15 monitors an amount of data being kept, concretely to say, transmitting data in accordance with the request from the motion data generator 17 as described above when the amount of data being kept surpasses a specified value, on the other hand, transmitting a process stopping order to the motion data generator 17 when the amount of data being kept becomes less than above-mentioned specified value, then obtaining information in relation to an evading operation from the evasion data storage 16, thereafter generating tool path data to make the tool evaded from a cutting position and transmitting such data to the motion data generator 17, while obtaining information in relation to a comeback operation from the evasion data storage 16 when the amount of data being kept again rises above the specified value, thereafter generating tool path data to make the tool comeback to the original cutting position and transmitting such data to the motion data generator 17. In the motion data generator 17, motion data in accordance with tool path data is generated, while the NC machine tool executes above-mentioned evading operation.

Since it takes a period to generate tool path data for a little bit complicated geometry such as a free curved surface etc., it might happen during a real-time processing that tool path data for next operation has not been generated even though a completion of a present operation. In this case, such an inconvenience might happen that a cutter mark could be marked on the workpiece because the tool substantially contacts with the workpiece for a long period, however, such problem can be effectively evaded through above-mentioned evading operation. Here, evading operation data (an evading operation pattern) in accordance with the cutting mode has been previously stored in the evasion data storage 16 through the input unit 22.

The data generation monitor 15 transmits process stopping orders to the tool path data generator 13 and the motion data generator 17 when an interruption signal is inputted from the input unit 22 for stopping the processes, on the other hand, transmitting process re-starting orders to the tool path data generator 13 and the motion data generator 17 when a re-start signal is inputted for re-starting the processes.

An operator might judge through a monitoring that it is possible to machine the workpiece at higher cutting speed than that being previously set in the cutting scenario generator 9 and also it is possible to make a feed rate faster, or might judge oppositely upon his experience. Further, he might judge that depth of cut in the direction of a tool axis as well as in the direction of a diameter of tool should be changed. At this time, the operator inputs the interruption signal from the input unit 22, whereby the cutting speed, the feed rate, and the depth of cut can be changed by the data generation monitor 15.

As above mentioned, the data generation monitor 15 stops the processes in the tool path data generator 13 and the motion data generator 17 when the interruption signal is inputted, making possible a rewrite of the cutting scenario stored in the cutting scenario storage 11, while transmitting the re-starting orders to the tool path data generator 13 and the motion data generator 17 when the re-start signal is inputted after data has been rewritten, thereafter re-starting the processes. Thus, following cuttings are all executed under a rewritten cutting condition. The description hereinbefore mentioned is to change the cutting condition during the execution of the cutting process. At this time, the cutting can be returned to its initial stage then re-started under the changed condition.

The correction of the cutting scenario as above mentioned is executed by the cutting scenario rewriting unit 12, wherein the cutting scenario rewriting unit 12 receives the input data from the input unit 22 then data stored in the cutting scenario storage 11 is rewritten. The output unit 23 is composed of a display apparatus, a printing apparatus, and an apparatus to store data in a recording media such as a floppy disc etc, indicating each data stored in the CAD data storage 3, the geometry data storage 5, the feature data storage 7, the tool/cutting data storage 8, the cutting scenario storage 11, the tool path data storage 14, the evasion data storage 16, and the motion data storage 18 by the display apparatus, while printing such data by the printing apparatus, storing it in the recording media such as the floppy disc etc. Therefore, the operator can indicate the cutting scenario stored in the cutting scenario storage 11 on the display apparatus, or can actually perform above-mentioned correction of the cutting scenario after the analysis of same through a print-out. Here, the output unit 23 plays a role as a cutting scenario output unit as set forth in claim 4, a motion data output unit as set forth in claim 6, and a database output unit as set forth in claim 10.

When data stored in the cutting scenario storage 11 is rewritten, data stored in the tool/cutting data storage 8 is updated by the tool/cutting data updating unit 10. That is to say, the tool/cutting data updating unit 10 refers to data stored in the cutting scenario storage 11 which has been rewritten, thereafter updating corresponding data stored in the tool/cutting data storage 8. Knowledge obtained through an actual cutting can be reflected on a following cutting owing to above-mentioned data updating function, which means that a learning function can be acquired through the actual cutting.

In this embodiment, the NC cutting program generator 19 is provided to generate an NC cutting program from tool path data which has been generated as mentioned above. The NC cutting program generator 19 is a process unit to generate a generally used NC cutting program (for example ISO format) on the basis of tool path data stored in the tool path data storage 14, wherein the generated NC cutting program is stored in the NC cutting program storage 20. The output unit 23 also indicates data stored in the NC cutting program storage 20 on the display apparatus, printing out such data by the printing apparatus, storing such data in the recording media such as the floppy disc etc. Therefore, the generated NC cutting program is stored in the recording media through which the NC cutting program will be able to be executed in another NC machine tool. Here, the output unit 23 also plays a role as a program output unit as set forth in claim 5.

As described above, according to the numerical controller 1 in accordance with this embodiment, the operator has to input neither data in relation to the feature shape of the workpiece nor data in relation to the cutting method such as the kind of tool and the cutting conditions thereof, therefore a period taken for a data input can be completely eliminated, whereby there is such an advantage that tool path data can be speedily generated, which may lead another advantage such that the workpiece can be speedily cut. Further, since any artificial error in an input operation never happens, the workpiece is free of defects and the tool is not damaged. Those advantages of the present invention may become more conspicuous in such a production to make one article for example a production to make one mold.

There is further advantage that a corresponding correction can be speedily and appropriately applied to generated tool path data which has some points to be improved or defects, because such generated tool path data is executed at real-time and a cutting condition thereof can be changed during a cutting process. As a result, a series of operations from a generation of tool path data to a final cutting of the workpiece can be completed for a short period. In above-mentioned production to make one article for example the production to make one mold, there is such an advantage that the cutting can be spontaneously re-started through a correction of generated tool path data.

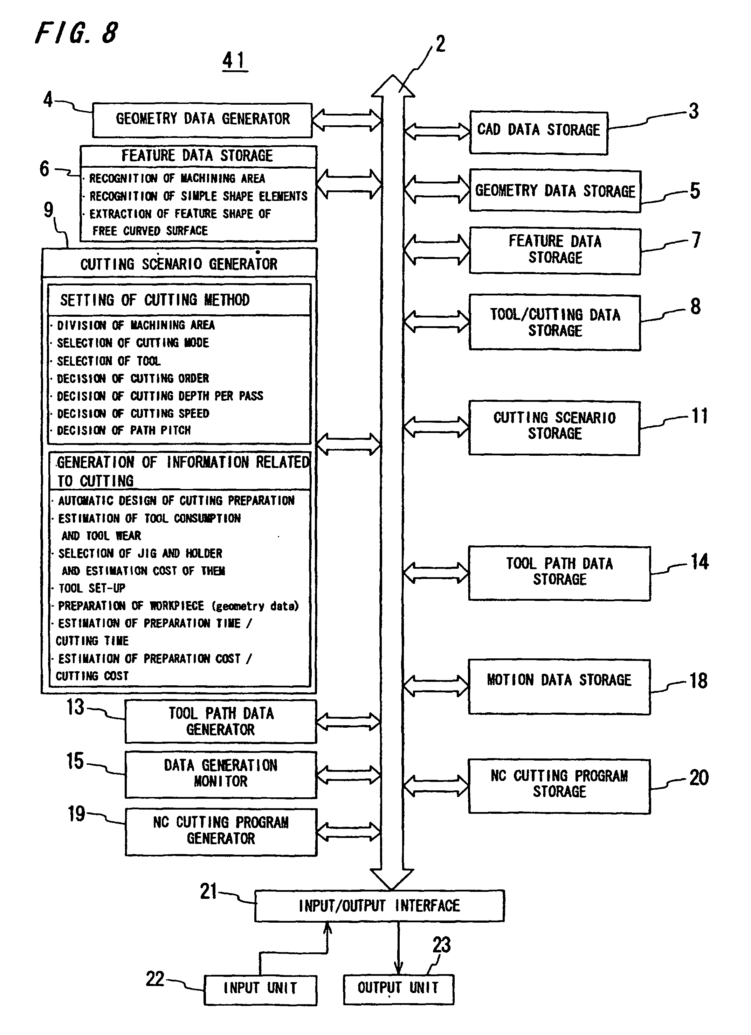

Next, second embodiment of the invention will be described with reference to Fig. 8. Fig. 8 is a block diagram showing main components of the tool path data generation apparatus in accordance with second embodiment.

As shown in Fig. 8, a tool path data generation apparatus 41 is provided apart from the NC machine tool, having a different construction from that of the numerical controller 1 in relation to first embodiment in such a point that it doesn't comprise the numerical controller 1, the tool/cutting data updating unit 10, the cutting scenario rewriting unit 12, the data generation monitor 15, and the evasion data storage 16 as well as in such a point that it isn't connected to each operation unit 24 of the NC machine tool. Hence, since components of the tool path data generation apparatus 41 in accordance with this embodiment are all included in the components of the numerical controller 1, the same codes are given to the same components in the tool path data generation apparatus 41 as those in the tool path data generation apparatus 1 with omitting detailed explanations thereof.

According to the tool path data generation apparatus 41 in accordance with this embodiment, a generated NC cutting program is directly transmitted to the externally provided numerical controller of the NC machine tool or is inputted into the numerical controller of the NC machine tool after above-mentioned NC cutting program has been once stored in a recording media such as a floppy disc etc. Thereafter, the cutting program is executed in the NC machine tool to cut the workpiece.

As mentioned above, the tool path data generation apparatus 41 in accordance with this embodiment is provided apart from the NC machine tool, provided such that it operates without interlocking with the NC machine tool, whereby tool path data can be generated irrespective of any operating condition of the NC machine tool. Therefore, an operability of the NC machine tool can be improved.

Here, if the numerical controller comprises at least the cutting scenario storage 11, the tool path data generator 13, the motion data generator 17, the input/output interface 21, and the input unit 22, the cutting scenario generated by the tool path data generator 41 in accordance with second embodiment is directly transmitted to the numerical controller through an on-line processing or is inputted into the numerical controller after the cutting scenario has been once stored in the recording media such as the floppy disc etc., thereafter tool path data and motion data are generated in order by the numerical controller so as to be processed. Here, the cutting scenario doesn't have a large capacity not like the NC cutting program but more compact, therefore the cutting scenario can be transmitted from the tool path data generator 41 to the numerical controller through an on-line processing and processed at real time.

On the other hand, in the numerical controller 1 in accordance with first embodiment, the cutting scenario is outputted from the numerical controller 1 then is inputted into the tool path data generator 41, whereby tool path data can be generated by the tool path data generator 41 with using the inputted cutting scenario. Further, provided with the cutting scenario rewriting unit 12 just like in the numerical controller 1, the cutting scenario can be appropriately corrected by the tool path data generator 41 at any time. On the other hand, provided with the tool/cutting data rewriting unit 10, data stored in the tool/cutting data storage 8 can be automatically updated. Thus, the operability of the NC machine tool can be effectively improved through an off-line processing owing to such an advantage that tool path data can be generated by both of the numerical controller and the tool path data generator with using the cutting scenario. In addition, it is also possible to generate the cutting scenario through a trace-back of the NC cutting program so as to generate geometry data. This process should be executed when CAD data itself must be corrected to cut the workpiece to an expected geometry.

## Claims

1. A tool path data generation apparatus (41) for automatically generating tool path data of a tool in an NC machine tool, the tool path data generation apparatus (41) comprising:
a feature data extractor (6) to extract at least features in relation to a three-dimensional shape of a workpiece on the basis of geometry data thereof created with using CAD;
a tool/cutting data storage (8) to store data such as a cutting mode and tool information in accordance with feature shape, a cutting speed and a depth of the cut in accordance with workpiece material or the like;
a cutting method setting unit (9) to set an optimal cutting method for each feature shape on the basis of feature data extracted by the feature data extractor (6) and data stored in the tool/cutting data storage (8); and
a tool path data generator (13) to generate tool path data on the basis of the cutting method set by the cutting method setting unit (9);
**characterized in that**
the tool path data generation apparatus (41) further comprises an information generator related to cutting (9) to generate information related to cutting such as a consumption amount of a tool, an estimated period taken for an abrasion of the tool, an estimated period taken for cutting or the like on the basis of the cutting method set by the cutting method setting unit (9) as well as information stored in the tool/cutting data storage (8).

2. The tool path data generation apparatus (41) as claimed in claim 1wherein the cutting method setting unit (9) divides a machining area for each feature shape on the basis of the feature data extracted by the feature data extractor (6) and sets the cutting method for each divided machining area;
the tool path data generator (13) generating tool path data every machining area on the basis of the cutting method set by the cutting method setting unit (9).

3. The tool path data generation apparatus (41) as claimed in claims 1 or 2 further comprising a cutting scenario output unit (23) to output the cutting method set by the cutting method setting unit (9) and/or information related to cutting generated by the information generator related to cutting (9).

4. The tool path data generation apparatus (41) as claimed in any of claims 1 to 3 further comprising:
an NC cutting program generator (19) to generate an NC cutting program on the basis of tool path data generated by the tool path data generator (13), and
a program output unit (23) to output the NC cutting program generated by the NC cutting program generator (13).

5. The tool path data generation apparatus (41) as claimed in any of claims 1 to 4 further comprising:
a motion data generator (17) to generate motion data to drive a servo mechanism of the NC machine tool on the basis of tool path data generated by the tool path data generator (13), and
a motion data output unit (23) to output the motion data generated by the motion data generator (17).

6. A numerical controller (1) to control the operation of the NC machine tool on the basis of tool path data of the tool, the numerical controller (1) comprising:
a tool path data generation apparatus (41) as claimed in claim 3;
a cutting scenario storage (11) to store the cutting method set by the cutting method setting unit (9) and information related to cutting generated by the information generator related to cutting (9);
an executing unit (24) to execute processes in order on the basis of tool path data generated by the tool path data generator (13), wherein the executing unit (24) temporarily stops the processes when receiving interruption signals, while re-starts the processes when receiving resuming signals for controlling the operation of the NC machine tool, and
a cutting scenario rewriting unit (12) to rewrite the cutting method and/or information related to cutting stored in the cutting scenario storage (11).

7. The numerical controller (1) as claimed in claim 6 further comprising a tool/cutting data updating unit (10) to update data stored in the tool/cutting data storage (8) by referring to data stored in the cutting scenario storage (11) which has been rewritten by the cutting scenario rewriting unit (12).

8. the numerical controller (1) as claimed in claim 7 further comprising a database output unit (23) to output data stored in the tool/cutting data storage (8).

## Patentansprüche

1. Vorrichtung (41) zum Erzeugen von Werkzeugwegdaten, zum automatischen Erzeugen von Werkzeugwegdaten eines Werkzeugs in einer NC-Werkzeugmaschine, wobei die Vorrichtung (41) zum Erzeugen von Werkzeugwegdaten Folgendes aufweist:
eine Vorrichtung (6) zum Abfragen von Merkmaldaten zum Abfragen von zumindest Merkmalen in Bezug auf eine dreidimensionale Form eines Werkstücks basierend auf den Geometriedaten desselben, welche unter Verwendung von CAD erstellt wurden;
einen Werkzeug-/Schneiddatenspeicher (8) zum Speichern von Daten, wie z.B. einer Schneidbetriebsart und einer Werkzeuginformation gemäß einer Merkmalform, einer Schnittgeschwindigkeit und einer Schnitttiefe gemäß dem Material des Werkstücks oder ähnlichem;
eine Einheit (9) zum Einstellen eines Schneidverfahrens zum Einstellen eines optimalen Schneidverfahrens für jede Merkmalform basierend auf den durch die Vorrichtung (6) zum Abfragen von Merkmaldaten abgefragten Merkmaldaten, und den im Werkzeug-/Schneiddatenspeicher (8) gespeicherten Daten;
einen Werkzeugwegdatenerzeuger (13) zum Erzeugen von Werkzeugwegdaten basierend auf dem Schneidverfahren, welches durch die Einheit (9) zum Einstellen eines Schneidverfahrens eingestellt wurde;
**dadurch gekennzeichnet, dass**
die Vorrichtung (41) zum Erzeugen von Werkzeugwegdaten zudem einen Erzeuger (9) von auf das Schneiden bezogenen Informationen zum Erzeugen von auf das Schneiden bezogenen Informationen, wie beispielsweise den Verbrauchsbetrag eines Werkzeugs, eine geschätzte, für den Abrieb des Werkzeugs benötigte Zeitdauer und eine geschätzte, für das Schneiden benötigte Zeitdauer oder ähnliches, basierend auf dem durch die Einheit (9) zum Einstellen eines Schneidverfahrens eingestellten Schneidverfahren sowie auf im Werkzeug-/Schneiddatenspeicher (8) gespeicherten Informationen aufweist.

2. Vorrichtung (41) zum Erzeugen von Werkzeugwegdaten nach Anspruch 1, wobei die Einheit (9) zum Einstellen des Schneidverfahrens einen Bearbeitungsbereich für jede Merkmalform basierend auf den durch die Vorrichtung (6) zum Abfragen von Merkmaldaten abgefragten Merkmaldaten unterteilt und das Schneidverfahren für jeden unterteilen Bearbeitungsbereich einstellt; und
der Werkzeugwegdatenerzeuger (13) Werkzeugwegdaten für jeden Bearbeitungsbereich basierend auf dem durch die Einheit (9) zum Einstellen des Schneidverfahrens eingestellten Schneidverfahren erzeugt.

3. Vorrichtung (41) zum Erzeugen von Werkzeugwegdaten nach Anspruch 1 oder 2, welche zudem eine Einheit (23) zum Ausgeben eines Schneidszenarios aufweist, um das durch die Einheit (9) zum Einstellen des Schneidverfahrens eingestellte Schneidverfahren und/oder von auf das Schneiden bezogenen Informationen auszugeben, welche durch den Erzeuger (9) von auf das Schneiden bezogenen Informationen erzeugt wurden.

4. Vorrichtung (41) zum Erzeugen von Werkzeugwegdaten nach einem der Ansprüche 1 bis 3, welche zudem Folgendes aufweist:
einen NC-Schneidprogrammerzeuger (19) zum Erzeugen eines NC-Schneidprogramms basierend auf den Werkzeugwegdaten, welche durch den Werkzeugwegdatenerzeuger (13) erzeugt wurden; und
eine Programmausgabeeinheit (23) zum Ausgeben des NC-Schneidprogramms, welches durch den NC-Schneidprogrammerzeuger (13) erzeugt wurde.

5. Vorrichtung (41) zum Erzeugen von Werkzeugwegdaten nach einem der Ansprüche 1 bis 4, welche zudem Folgendes aufweist:
einen Bewegungsdatenerzeuger (17) zum Erzeugen von Bewegungsdaten zum Antreiben einer Servoeinrichtung der NC-Werkzeugmaschine basierend auf den durch den Werkzeugwegdatenerzeuger (13) erzeugten Werkzeugwegdaten; und
eine Bewegungsdatenausgabeeinheit (23) zum Ausgeben der durch den Bewegungsdatenerzeuger (17) erzeugten Bewegungsdaten.

6. Eine numerische Steuerung (1) zum Steuern der Operation der NC-Werkzeugmaschine basierend auf Werkzeugwegdaten des Werkzeugs, wobei die numerische Steuerung (1) Folgendes aufweist:
eine Vorrichtung (41) zum Erzeugen der Werkzeugwegdaten nach Anspruch 3;
einen Schneidszenariospeicher (11) zum Speichern des durch die Einheit (9) zum Einstellen des Schneidverfahrens eingestellten Schneidverfahrens und von auf das Schneiden bezogenen Informationen, welche durch den Erzeuger (9) von auf das Schneiden bezogenen Informationen erzeugt wurden;
eine Ausführungseinheit (24) zum Ausführen der Verfahren in einer Reihenfolge basierend auf den Werkzeugwegdaten, welche durch den Werkzeugwegdatenerzeuger (13) erzeugt wurden, wobei die Ausführungseinheit (24) beim Empfangen von Unterbrechungssignalen die Verfahren vorübergehend anhält, während sie die Verfahren beim Empfangen von Wiederaufnahmesignalen zum Steuern der Operation der NC-Werkzeugmaschine neu startet; und
eine Einheit (12) zum Umschreiben des Schneidszenarios zum Umschreiben des Schneidverfahrens und/oder von auf das Schneiden bezogenen Informationen, welche im Schneidszenariospeicher (11) gespeichert sind.

7. Numerische Steuerung (1) nach Anspruch 6, welche zudem eine Einheit (10) zum Aktualisieren der Werkzeug/Schneiddaten zum Aktualisieren von im Werkzeug/Schneiddatenspeicher (8) gespeicherten Daten durch das Bezug nehmen auf im Schneidszenariospeicher (11) gespeicherten Daten aufweist, welche durch die Einheit (12) zum Umschreiben des Schneidszenarios umgeschrieben wurden.

8. Numerische Steuerung (1) nach Anspruch 7, welche zudem eine Ausgabeeinheit (23) der Datenbank zum Ausgeben von Daten aufweist, welche im Werkzeug-/Schneiddatenspeicher (8) gespeichert sind.

## Revendications

1. Appareil de génération de données de trajectoire d'outil (41) destiné à générer automatiquement des données de trajectoire d'outil dans une machine-outil à commande numérique, l'appareil de génération de données de trajectoire d'outil (41) comprenant :
un extracteur de données d'élément (6) pour extraire au moins des éléments par rapport à une forme tridimensionnelle d'une pièce à usiner sur la base des données géométriques de celle-ci créées en utilisant la CAO ;
un dispositif de stockage de données d'outil/de découpage (8) pour stocker des données telles qu'un mode de découpage et des informations d'outil conformément à la forme d'un élément, une vitesse de découpage et une profondeur de l'entaille conformément au matériau d'une pièce à usiner ou similaire ;
une unité de paramétrage du procédé de découpage (9) pour paramétrer un procédé de découpage optimal pour chaque forme d'élément sur la base des données d'élément extraites par l'extracteur de données d'élément (6) et des données stockées dans le dispositif de stockage de données d'outil/de découpage (8) ; et
un générateur de données de trajectoire d'outil (13) pour générer des données de trajectoire d'outil sur la base du procédé de découpage paramétré par l'unité de paramétrage du procédé de découpage (9) ;
**caractérisé en ce que**
l'appareil de génération de données de trajectoire d'outil (41) comprend en outre un générateur d'informations liées au découpage (9) pour générer des informations liées au découpage telles qu'une quantité de consommation d'un outil, une période estimée demandée pour une abrasion de l'outil, une période estimée demandée pour le découpage ou similaire sur la base du procédé de découpage paramétré par l'unité de paramétrage du procédé de découpage (9) ainsi que des informations stockées dans le dispositif de stockage de données d'outil/de découpage (8).

2. Appareil de génération de données de trajectoire d'outil (41) selon la revendication 1, dans lequel l'unité de paramétrage du procédé de découpage (9) divise une zone d'usinage pour chaque forme d'élément sur la base des données d'élément extraites par l'extracteur de données d'élément (6) et paramètre le procédé de découpage pour chaque zone d'usinage divisée ;
le générateur de données de trajectoire d'outil (13) générant des données de trajectoire d'outil de chaque zone d'usinage sur la base du procédé de découpage paramétré par l'unité de paramétrage du procédé de découpage (9).

3. Appareil de génération de données de trajectoire d'outil (41) selon l'une quelconque des revendications 1 ou 2, comprenant en outre une unité de sortie de scénario de découpage (23) pour sortir le procédé de découpage paramétré par l'unité de paramétrage du procédé de découpage (9) et/ou les informations liées au découpage générées par le générateur d'informations liées au découpage (9).

4. Appareil de génération de données de trajectoire d'outil (41) selon l'une quelconque des revendications 1 à 3, comprenant en outre :
un générateur de programme de découpage à commande numérique (19) pour générer un programme de découpage à commande numérique sur la base des données de trajectoire d'outil générées par le générateur de données de trajectoire d'outil (13) ; et
une unité de sortie de programme (23) pour sortir le programme de découpage à commande numérique généré par le générateur de programme de découpage à commande numérique (13).

5. Appareil de génération de données de trajectoire d'outil (41) selon l'une quelconque des revendications 1 à 4, comprenant en outre :
un générateur de données de mouvement (17) pour générer des données de mouvement pour entraîner un servomécanisme de la machine-outil à commande numérique sur la base des données de trajectoire d'outil générées par le générateur de données de trajectoire d'outil (13) ; et
une unité de sortie de données de mouvement (23) pour sortir les données de mouvement générées par le générateur de données de mouvement (17).

6. Contrôleur numérique (1) pour contrôler le fonctionnement de la machine-outil à commande numérique sur la base des données de trajectoire d'outil de l'outil, le contrôleur numérique (1) comprenant :
un appareil de génération de données de trajectoire d'outil (41) selon la revendication 3 ;
un dispositif de stockage de scénario de découpage (11) pour stocker le procédé de stockage paramétré par l'unité de paramétrage du procédé de découpage (9) et les informations liées au découpage générées par le générateur d'informations liées au découpage (9) ;
une unité d'exécution (24) pour exécuter les processus dans l'ordre sur la base des données de trajectoire d'outil générées par le générateur de données de trajectoire d'outil (13), dans lequel l'unité d'exécution (24) arrête temporairement les processus lorsqu'il reçoit des signaux d'interruption, tout en redémarrant les processus lorsqu'il reçoit des signaux de reprise pour contrôler le fonctionnement de la machine-outil à commande numérique ; et
une unité de réinscription du scénario de découpage (12) pour réinscrire le procédé de découpage et/ou les informations liées au découpage stockées dans le dispositif de stockage du scénario de découpage (11).

7. Contrôleur numérique (1) selon la revendication 6 comprenant en outre une unité de mise à jour des données d'outil/de découpage (10) pour mettre à jour les données stockées dans le dispositif de stockage de données d'outil/de découpage (8) en faisant référence aux données stockées dans le dispositif de stockage de scénario de découpage (11) qui ont été réinscrites par l'unité de réinscription du scénario de découpage (12).

8. Contrôleur numérique (14) selon la revendication 7, comprenant en outre une unité de sortie de base de données (23) pour sortir les données stockées dans le dispositif de stockage d'outil/de découpage (8).
